# EUROPÄISCHE PATENTSCHRIFT

(11) **EP 2 221 648 B1**
(45) Veröffentlichungstag und Bekanntmachung des Hinweises auf die Patenterteilung: **21.02.2018**
(21) Anmeldenummer: 10150855.4
(22) Anmeldetag: 15.01.2010
(51) Int. Cl.: G02B 6/44

(54) **Patch Panel für Lichtwellenleiter sowie ein Verfahren zu dessen (Nach) Installation**
Patch panel for fibre optic cables and method for its (subsequent) installation
Patch Panel pour guide optique ainsi que son procédé de (ré)installation

(30) Priorität: 11.02.2009 DE 102009008364
(43) Veröffentlichungstag der Anmeldung: 25.08.2010
(73) Patentinhaber: Moll, Hans, 88069 Tettnang (DE)
(72) Erfinder: Moll, Hans, 88069 Tettnang (DE)
(74) Vertreter: Neidl-Stippler, Cornelia

(56) Entgegenhaltungen:
- DE-A1- 4 107 228
- DE-U1- 9 210 229
- DE-U1- 9 410 617
- DE-U1- 29 504 191
- DE-U1-202005 009 182
- DE-U1-202005 011 459
- GB-A- 2 367 378

## Beschreibung

Die Erfindung betrifft ein Patch Panel für Lichtwellenleiter sowie ein Verfahren zu dessen (Nach) Installation.
Patch Panels sind Umsteckfelder, welche dem Anschluß, dem Verteilen und Rangieren von Verbindungen dienen. Die Frontblende eines Patch Panels beinhaltet die Anschlußkomponenten für abgehende Kabel: Jeder Anschlußdose ist auf dem Patch Panel eine eigene Steckverbindung zugeordnet. Patch Panel gibt es in verschiedensten Ausführungsformen, sie unterschieden sich sowohl hinsichtlich der Anzahl, als aus der Ausbildung für Steckeinrichtungen. In der Regel besteht ein Patch Panel aus in Reihe liegenden Anschlußkomponenten der gleichen Kategorie. Eine wachsende Bedeutung des Einsatzes von Lichtwellenleitern in der Kommunikation, bspw. bei der Übermittlung von breitbandigen Signalen, führt zu immer komplexeren Schaltanlagen. Diese Schaltanlagen sind meist in Lichtwellenleiter-Verteilergestellen angeordnet, die überwiegend aus Patch Panel bestehen. In diesen Patch Panel enden die externen Kabel und werden über Glasfaser-Patchkabel miteinander verbunden. Die Patchkabel selbst sind Kabel mit mindestens zwei von einem Kabelmantel und von Zugentlastungselementen umgebenen Lichtwellenleitern, die eine Kupplungsvorrichtung, bspw. einen Stecker, aufweisen. Patch Panel sind mit vielen Kupplungen ausgerüstet, welche Anbindung von mehreren externen Lichtwellenleitern an das Patchkabel ermöglichen.
Typischerweise sind derartige Verteilerschränke in 19-Zoll-Technik ausgeführt und umfassen Patch Panels in Form von Gehäusen, die übereinander angeordnet sind, wobei sich innerhalb der Verteilerschränke ein Montagechassis befindet, an denen die Gehäuse befestigt - bspw. durch Schrauben - werden. Die Kabel der am Frontblech angeordneten Verbindungsteile führen nach hinten weg, die Kabel der aufgesteckten Verbindungsteile werden seitlich weggeführt oder direkt unterhalb der Frontbleche durch eine Kabelführung aufgenommen.
Bekannte Lichtwellenleiter Patch Panel weisen ein Gehäuse mit einer Bodenplatte, Seitenwänden, die seitlich in etwa rechtwinkelig davon abgebogenen Befestigungsabschnitten zur Befestigung am Schrank enden auf. Innerhalb des Patch Panels befindet sich ein Kassettenhalter, in dem die Lichtwellenleiter eines Kabels aufgeteilt sind und eine Kabelrestlänge aufgenommen ist. Ferner weisen die bekannten Lichtwellenleiter Patch Panel eine Frontwand mit Ausschnitten zum Durchtritt der Steckerkupplungen der Pigtails aus den darin befindlichen installierten Kassettenhaltern auf.
Das Lichtwellenleiter Patch Panel wird üblicherweise von einem Deckel, der auf die Seitenwände aufleg- und an diesen befestigbar ist, abgeschlossen, um Verstaubung oder Verschmutzung des Inhalts zu vermeiden.

DE 41 07 228 A1 offenbart beispielsweise ein Patch Panel mit einem Gehäuse und einer in das Gehäuse einschiebbaren Spleißbox.

Diese bekannten Patch Panel werden installiert, indem die Spleißstelle des ankommenden, mehrere Lichtwellenleiter Fasern aufweisenden Kabels geschützt mit zusätzlichen Kabelüberlängen in der Spleißkassette aufgewickelt ist und in der Patch Panel-Rückwand eine Kabelhalterung mit Zugentlastung für das eintretende Lichtwellenleiter-Kabel vorgesehen ist. Vom Kassettenhalter abgehende Pigtails/Einzel-Lichtwellenleiter sind mit Kupplungselementen, wie Steckern, versehen und in Ausnehmungen in der Frontplatte des Patch Panel befestigt, damit andere Kabel an diese Elemente ohne Belastung der empfindlichen Lichtwellenleiterfasern angekoppelt werden können.
Ein derartig installiertes Patch Panel konnte einzeln nur mit weiteren Kabeln oder anderen Kabeln nachinstalliert oder defekte Kabel ersetzt werden, indem es vollständig ausgebaut und die Lichtwellenleiter neu eingezogen wurden.
Der Ausbau eines fertig installierten Patch Panels aus einem Kabelschrank ist jedoch meist nicht möglich ohne andere, im gleichen Bereich eingebaute Patch Panels ebenfalls auszubauen - bereits der Ausbau eines Panels ist sehr aufwendig - der Ausbau unbeteiligter Panels führt zu weiterem erheblichem Arbeitsaufwand und Stillstandzeiten des durch den Kabelschrank verbundenen Netzwerks.
Es traten ferner Probleme auf, falls verschiedene Kupplungen in einem Patch Panel vorgesehen werden sollten - aufgrund der nur auf gleiche Kupplungsarten ausgerichteten Frontplatten war dies praktisch nur mit hohem Aufwand unter individueller Änderung der Frontplatte möglich.
Dies führte zu erheblichen Zeitverlusten bei der Montage, die Übersichtlichkeit und Überprüfbarkeit der Installation war nach Montage des Patch Panel nicht mehr gegeben.
Es ist daher Aufgabe der Erfindung, ein einfach zugängliches Lichtwellenleiter Patch Panel zu schaffen, das Nachinstallation, Inspektion und Reparatur der empfindlichen Lichtwellenleiterarchitektur in einfacher Weise ermöglicht.
Die Aufgabe wird erfindungsgemäß durch ein Lichtwellenleiter-Patch Panel mit den Merkmalen des Patentanspruches 1 gelöst. Ferner bezieht sich die Erfindung auch auf ein Verfahren zur Installation eines derartigen Lichtwellenleiter Patch Panel gemäß Anspruch 10. Vorteilhafte Weiterbildungen ergeben sich aus den abhängigen Ansprüchen.
Dadurch, daß das Patch Panel mindestens eine verschieblich aus einem Gehäuse vor - und rückwärts herausziehbare Spleißkassette aufweist, in der ein ankommendes Lichtwellenleiter-Kabel aufgeteilt und die einzelnen Fasern dann an Kabelsteckern befestigt sind, kann nun nach Abbau der Frontplatte schubladenartig die gesamte Spleißkassette nach vorne oder hinten mit den installierten Kabeln herausgezogen werden, ohne das Patch Panel selbst vom Schrank abbauen zu müssen. Dadurch können erhebliche Installationszeiten, welche bei Netzwerken das Gros der Kosten verursachen, verkürzt werden.
Das erfindungsgemäße Lichtwellenleiter-Patch Panel wird installiert, indem die mit Lichtwellenleiter Kabelspleißen installierten Spleißkassetten mit den in der Spleißkassettenfront befestigten Lichtwellenleiter-Steckern auf den Gehäuseboden des Lichtwellenleiter Patch Panels geschoben werden - unabhängig davon, ob das Gehäuse nun in einem Kabelschrank installiert ist oder nicht. Nach Einschieben der installierten Spleißkassette wird eine Frontplatte mit Ausnehmungen für die Lichtwellenleiter-Kupplungen vor der Gehäusefront angebracht - bspw. so angeschraubt, daß die Frontplatte ohne Abbau des Gehäuses vom Schrank selbst angebracht bzw.
getrennt werden kann. Durch das Anbringen der Frontplatte, in der Ausnehmungen für die Lichtwellenleiter-Kupplungen vorgesehen sind, kann in üblicher Weise ein Lichtwellenleiter angesteckt werden.

Falls andere Kabel mit anderen technischen Spezifikationen verlangt werden, weil das Netz umgerüstet wird oder ein Fehler in diesem Modul vorliegt - können die Kupplungselemente in der Frontplatte von den Lichtwellenleiter-Steckern abgesteckt und die Frontplatte abgenommen werden, wobei auf Grund der Tatsache, daß das Gehäuse so befestigt ist, daß die Frontplatte auch ohne Ausbau des Gehäuses entfernbar ist, das Gehäuse selbst an seinem Platz verbleibt. Danach kann entweder die gesamte Spleißkassette nach hinten herausgezogen werden oder bei einer bevorzugten Ausführungsform derselben nur eine Teilrückwand derselben mit dem Kassettenhalter zur Inspektion nach hinten herausgezogen werden. Dadurch kann eine Demontage des Patch Panel vermieden werden. Je nach Anforderung können nach Abnehmen der Frontplatte mit den Kupplungselementen auch andere Kupplungselemente mit entsprechend angepaßten Frontplatten eingesetzt werden.

Falls nun ein anderes Kabel nachträglich eingezogen werden soll, ist auch dies in einfacher Weise möglich. Zunächst wird die Frontplatte nach Abnehmen der Kabel-Kupplungen abmontiert, wobei das Gehäuse aufgrund der Rest-Befestigung am Regal verbleibt, danach wird eine ggf. vorhandene Verriegelung der mindestens einen Spleißkassette gelöst und die Spleißkassette nach hinten herausgezogen. Sie kann nun durch zwei Spleißkassetten mit neuen Kabeln ersetzt werden. Nach der Installation werden die nachinstallierten Spleißkassetten wieder in das Gehäuse geschoben, ggf. neu im Gehäuse verriegelt und die gleiche oder eine andere Frontplatte mit den entsprechenden Lichtwellenleiter-Steckern die darin angeordneten Kupplungen verbunden.

Bei einer besonders bevorzugten Spleißkassette ist deren Rückwand mit der Kabeleinführung in den Kassettenhalter geteilt, sodaß der abgeteilte Rückwandabschnitt ggf. mit dem Kassettenhalter zu Inspektions- oder Installationszwecken aus der Spleißkassette herausgezogen werden kann, ohne die gesamte Spleißkassette herauszunehmen.

Das Gehäuse und alle Bestandteile des Patch Panel können im wesentlichen aus Metall oder Kunststoff bestehen.

Nachfolgend wird die Erfindung genauer anhand eines bevorzugten Ausführungsbeispiels sowie der Zeichnung näher erläutert, auf das sie jedoch keinesfalls beschränkt ist. Darin zeigt:
Fig. 1 schematisch eine Spleißkassette für ein PatchPanel ohne Deckel;
Fig. 1a die Kabeleinführung in das Patch Panel für ein Mehrfaser-Einzelkabel schematisch detailliert
Fig. 2 schematisch die Anordnung von zwei Spleißkassetten in einem Patch Panel mit abgenommenem Deckel von oben mit dazugehörigem Frontblech
Fig. 3 eine Frontplatte für verschiedenartige Lichtwellenleiter Kupplungen und eine Spleißkassette im Patch Panel;
Fig. 4 eine Frontplatte für verschiedenartige Lichtwellenleiter Kupplungen bei zwei Spleißkassetten im Patch Panel
Fig. 5 eine Spleißkassette (ohne Kassetterihalter dargestellt) mit einem Verbindungselementhalter sowie eine Frontblende zum Aufbringen auf die Spleißkassette
Fig. 6a ein Gehäuse für mindestens eine Spleißkassette; und
Fig. 7 eine Mehrfach-beschickbares Gehäuse für Spleißkassetteen

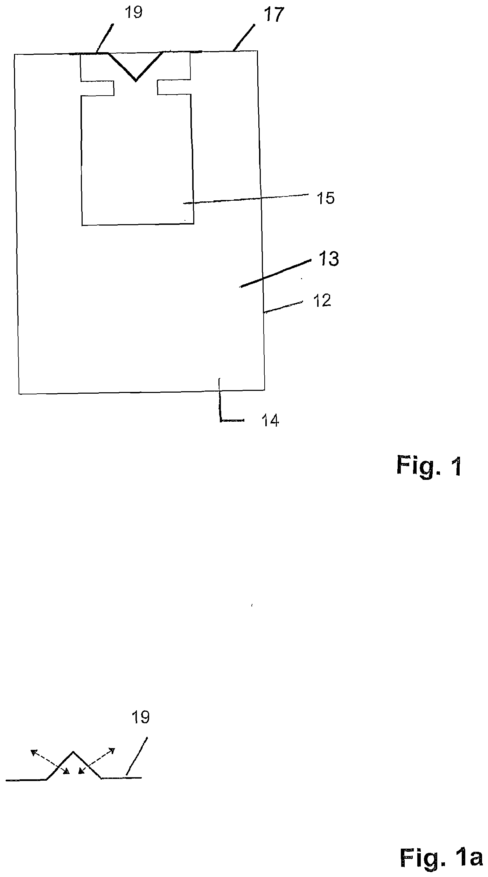

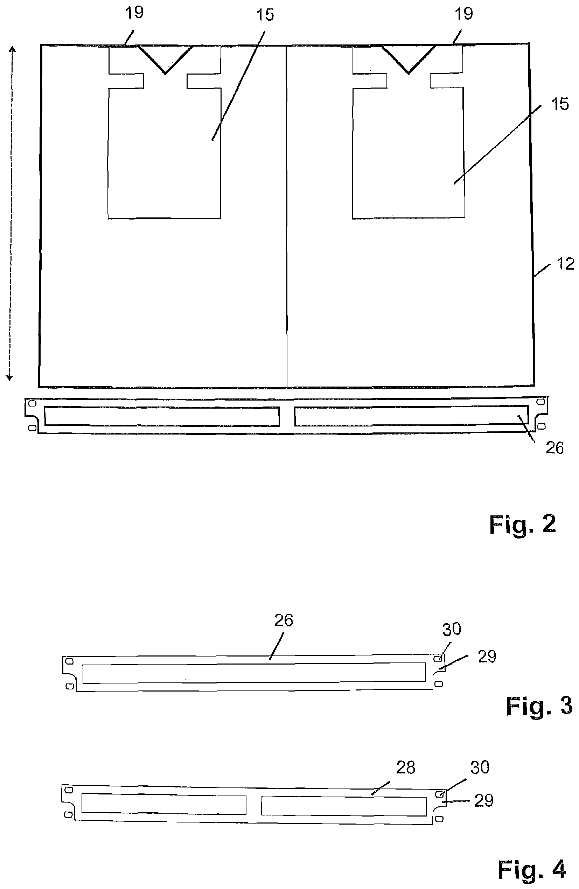

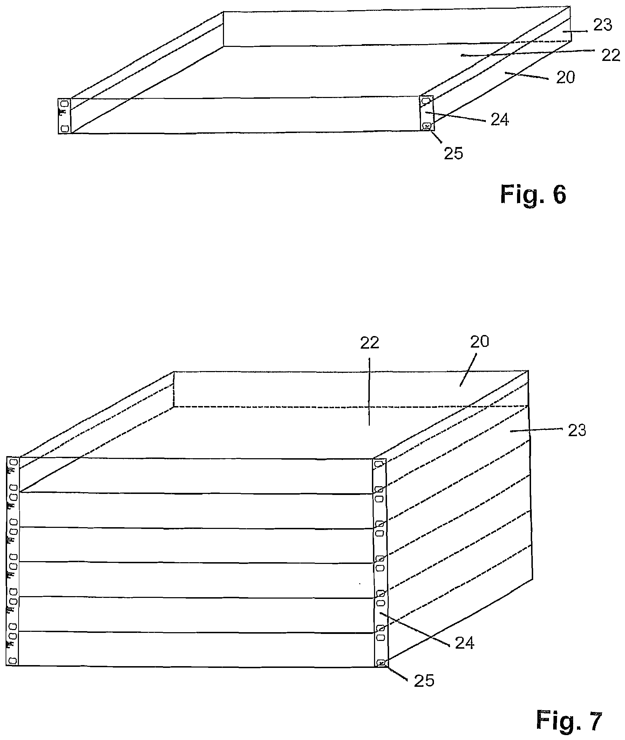

Wie in Fig. 1 gezeigt, ist eine Spleißkassette 12 mit einer senkrechten Frontwand 14, einem Spleißkassettenboden 13, der nach hinten an einer - bevorzugt - geteilten Kassettenrückwand 17, 19 endet, vorgesehen, die mit einem Lichtwellenleiter Kabel mit Kabelsteckern, die auf einem Kassettenhalter 15 in die Spleißkassette 12 eingelegt sind, belegt werden kann. Hier wird die Kabeleinführung von innen oder außen an die Spleißkassettenrückwand montiert. Der Kassettenhalter wird auf die Kabeleinführung arretiert und so mit dieser eine Einheit, die durch Lösen der Arrettierung nach hinten vollständig für Arbeiten daran herausgezogen werden kann. Dabei müssen keine Kabel oder Buchsen demontiert werden. Jeder Kabelstecker endet in einer Kupplung in einer Kupplungsöffnung in der Spleißkassetten-Frontwand 14, in welcher diese befestigt ist. Das Kabel ist in der Spleißkassetten-Rückwand in üblicher Weise befestigt, wie aus Fig. 1a ersichtlich. Falls die Spleißkassette 12 nachinstalliert werden soll, kann nur der abnehmbare geteilte Spleißkassette-Rückwandabschnitt 19 geöffnet und gemeinsam mit dem Kassettenhalter 15 herausgezogen, nachinstalliert und wieder in die Spleißkassette eingebaut werden. Die derart mit einem Lichtwellenleiter Kabel installierte Spleißkassette 12 wird in das Gehäuse 20 des PatchPanels geschoben, wie in Fig. 2 für eine Ausführungsform des PatchPanels mit 2 Spleißkassetten in der Draufsicht bzw. perspektivisch in Fig.6 getrennt vom Kabelschrank dargestellt ist. Die Seitenwände 23 des Gehäuses 20 laufen in vorderen Seitenbefestigungsabschnitten 24 aus, verlängern diese und sind rechtwinkelig seitlich nach außen gebogen, an den Seitenbefestigungsabschnitten 24 sind Befestigungseinrichtungen 25 für das Patch Panel 10 am Kabelschrank ausgebildet.
Auch nach Lösen der Frontplatte können die installierten Spleißkassetten nach vorne für Reinigungs- oder Reparaturzwecke herausgezogen werden, falls der Kassettenhalter aus verschiedenen, dem Fachmann geläufigen Gründen, nicht mit dem abtrennbaren Rückwandabschnitt 19 nach hinten herausgezogen werden soll.
Die Befestigungseinrichtungen des Gehäuses 20 sind bei dieser Ausführungsform für einen Kabelschrank zwei Durchgangsbohrungen 25 in den Seitenbefestigungsabschnitten 24 vorgesehen, durch welche Schrauben, Stifte od. dgl. treten können, mit denen das Gehäuse 20 dann am Gestell des Kabelschranks befestigt ist. Es können aber auch andere Befestigungsarten, wie sie bspw. bei der DE 103 13 358 B1 beschrieben sind, eingesetzt werden.
Auf das nun mit der mindestens einen installierten Spleißkassette 12 ausgestattete und am Kabelschrank angebrachte Gehäuse 20 wird eine Frontplatte 26, 28 aufgebracht, welche so am Gehäuse/Kabelschrank 20 befestigt wird, daß ihre Befestigung gelöst werden kann, ohne daß das Gehäuse 20 sich vom Kabelschrank trennt. Dies wird bei der dargestellten Ausführungsform dadurch gelöst, daß die Frontplatte 26 seitlich einen Befestigungsabschnitt mit nur einem Schraubloch 30 aufweist, mit dem die Frontplatte am Gehäuse 20 und am Kabelschrank befestigt wird, während das Gehäuse 20 über einen größeren Seitenbefestigungsabschnitt 24 mit zwei Schraublöchern 25 an Schrank festgeschraubt ist. Falls nun die - in dieser Ausführungsform - obere Schraube gelöst wird, kann das Frontblech abgenommen werden - das Gehäuse 20 verbleibt angeschraubt über das andere Schraubloch am Schrank.

In Fig. 3 ist ein Frontplatte 26 für verschiedene oder überdimensionierte Stecker, wie Doppelkupplungen, dargestellt. Durch längliche große Fenster ist jede Kupplungsform aufnehmbar.

Fig. 4 zeigt dagegen eine Frontplatte 28 für beliebige Stecker und zwei Spleißkassetten im Gehäuse.

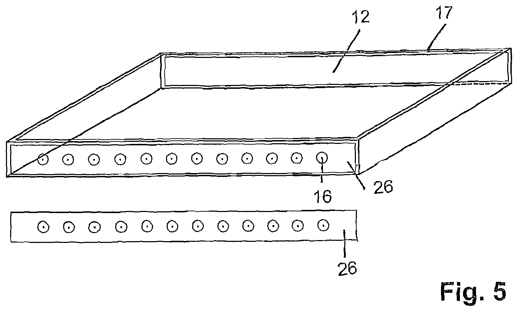

In Fig. 5 ist schematisch perspektivisch eine Spleißkassette 12 ohne Kassettenhalter oder Rückwanddetails gezeigt. Diese Spleißkassette besteht aus einem Gehäuse, dessen Front zur Aufnahme von FO-Steckern eingerichtet ist. Die Rückseite dient zur Kabeleinfühhrung mittels dafür besonderes konstruierten Kabelaufnahmen. Die Spleißkassette front kann ein fester Bestandteil der Spleißkassette sein, in die verschiedene Bohrungen entsprechend den einzusetzenden Steckern/Buchsen vorgesehen sind. Falls dies nicht der Fall ist, kann eine getrennte Frontplatte auf die Spleißkassette mit entsprechenden Buchsen, bspw. für Kupplungen ST, SC, SC-Duplex, FC, FC-Duplex, E2000, LC vorgesehen sein. Die Rückwand dient zur Kabeleinführung für mindestens ein Kabel, das sowohl gerade als auch unter einem Winkel eingeführt werden kann. Die mindestens eine Kabeleinführung kann bspw. so konstruiert sein, daß die Verschraubung von oben über einen Schlitz in den Kabeleinführungshalter montiert werden kann. Der Kabeleinführungshalter kann sowohl von außen als auch von innen in die Spleißkassette montierbar sein. Es ist ersichtlich, daß ein Kabelstecker in eine Kupplung, die in der Spleißkassettenfrontwand 26 befestigt ist, gesteckt werden kann. An diese Kupplung können nun in üblicher Weise Datenleitungen angesteckt werden.

In Fig. 6 ist ein Gehäuse 20 gezeigt, in welches mindestens eine Spleißkassette eines erfindungsgemäßen Patch Panels einschiebbar ist. Dazu ist das Gehäus3 20 vorne und hinten offen und dient als Schubladenaufnahme für die schubladenartig verschieblichen Lichtwellenleiter Spleißkassetten. Das Gehäuse kann eine oder mehrere Höheneinheiten (HE) hoch sein, damit ggf. mehrere Spleißkasseten senkrecht oder waagerecht eingebaut werden können. Die Spleißkassetten können im Gehäuse durch Raster oder Verschrauben oder andere geeignete Mittel, wie sie dem Fachmann bekannt sind, arretiert werden. Das Gehäuse 20 weist bei der dargestellten Ausführungsform einen Gehäuseboden 22, eine Gehäuseseitenwand, einen Seitenbefestigungsabschnitt 24 mit Befestigungsbohrungen 25 auf. Wenn eine Spleißkassette 12 aus dem Gehäuse 20 nachinstalliert werden soll, kann deren Rückwand 17 geöffnet und der Kassettenhalter 15 mit dem abtrennbaren Rückwandabschnitt 19 dieser zu Wartungs- oder Installationsarbeiten herausgezogen werden, ohne daß das Gehäuse 20 vom Kabelschrank getrennt werden muß. Meist wird das Gehäuse 20 auch einen abnehmbaren Deckel 31 besitzen, welcher das Gehäuseinnere schützt, dessen Abbau weitere Probleme verursacht. Die Vorteilhaftigkeit dieser Inspektionsmöglichkeit bspw. von der Schrankfront her ohne Ausbau des Patch Panel ist offensichtlich , da sie keine Installation unter ungünstigen Bedingungen, wie im Dunkeln in engen Gassen hinter Schränken od. dgl.
Dadurch, daß erfindungsgemäß nunmehr die Funktion der Kabelbefestigung und des Kassettenhalters von derjenigen des Patch Panel Gehäuses 20 getrennt ist, wird eine sehr viel flexiblere und schneller Installation von Lichtwellenleiter Kabeln möglich.
Insgesamt erhöht die Erfindung die Zuverlässigkeit, verringert den Installations- und Wartungsaufwand bei Lichtwellenleiter-Anschlüssen in Kabelschränken erheblich und ermöglicht einen wichtigen Beitrag zur breiteren Durchsetzung der Verlegung von Lichtwellenleiter Kabeln in der Datenkommunikation.
Es ist zu beachten, daß das erfindungsgemäße Patch Panel nicht nur für Kabelschränke vorteilhaft ist, sondern auch in Alleinstellung - bspw. als Aufputzgehäuse, einsetzbar ist, wobei ebenfalls viele Vorteile bei der Installation gegeben sind, wie dem Fachmann aus der vorstehenden Beschreibung der Installation im Kabelschrank ersichtlich.

Während die Erfindung detailliert anhand bevorzugter Ausführungsformen beschrieben wurde, ist dem Fachmann ersichtlich, daß verschiedenste Alternativen und Ausführungsformen zur Durchführung der Erfindung im Rahmen des Schutzumfangs der Ansprüche möglich sind.

### Bezugszeichenliste

- 10: Patch Panel
- 12: Spleißkassette
- 13: Spleißkassettenboden
- 14: Frontwand von 12
- 15: Kassettenhalter von 12
- 16: Kupplungsdurchführung von 12
- 17: Spleißkassetterückwand
- 18: Kabelkamm von 12
- 19: abtrennbarer Rückwandabschnitt von 12 mit Kabeleinführung
- 20: Gehäuse
- 22: Gehäuseboden
- 23: Gehäuseseitenwand
- 24: Seitenbefestigungsabschnitt von 23
- 25: Befestigungsbohrung
- 26: Frontplatte für verschiedene Anschlußelemente einer Spleißkassette
- 28: Frontplatte f. verschiedene Anschlußelemente f. 2 Spleißkassetten in Gehäuse 20
- 29: Frontplattenbefestigungsabschnitt
- 30: Befestigungseinrichtrung an 29

## Patentansprüche

1. Patch Panel, insbesondere für Lichtwellenleiter, mit:
einem Gehäuse (20) mit einem Gehäuseboden (22), Gehäuseseitenwänden (23) mit rechtwinkelig abgebogenen Seitenbefestigungsabschnitten (24) mit jeweils zwei Befestigungsbohrungen (25) zur Befestigung des Patch Panel an einem Kabelschrank und ggf. einem darauf anbringbaren Gehäusedeckel (31); und mindestens einer in das Gehäuse (20) einschiebbaren Spleißkassette (12) mit einem Spleißkassettenboden (13), einer Spleißkassettenrückwand (19) mit Lichtwellenleiter-Kabel-Einlässen mit Lichtwellenleiter-Kabelbefestigern; einem darin befindlichen Kassettenhalter (15) sowie einer senkrechten Frontwand (14) mit Steckeraufnahmen für die aus der Spleißkassette (12) austretenden Lichtwellenleiterstecker;
**gekennzeichnet durch**
eine abmontierbare Frontplatte (26, 28) mit mindestens einem Ausschnitt entsprechend den an die Lichtwellenleiterstecker anzusteckenden Kupplungen und seitlichen Frontplattenbefestigungsabschnitten (29) mit jeweils einem Schraubloch (30) zur Befestigung der Frontplatte (26, 28) an einer der zwei Befestigungsbohrungen (25) und einem Ausschnitt für die andere Befestigungsbohrung (25) eines der Seitenbefestigungsabschnitte (24) des Gehäuses (20).

2. Patch Panel nach Anspruch 1, **dadurch gekennzeichnet, dass** die Spleißkassette (12) eine abnehmbare Rückwand (19) aufweist, an welcher der Kassettenhalter (15) befestigt ist und mit der er herausziehbar ist, ohne das Patch Panel vom Kabelschrank abzubauen.

3. Patch Panel nach einem der Ansprüche 1 bis 2 4 **dadurch gekennzeichnet, dass** das Gehäuseunterteil (23, 22, 19) aus einem Flachmaterial-Abschnitt gebogen ist.

4. Patch Panel nach einem der Ansprüche 1 bis 3, **dadurch gekennzeichnet, dass** eine Federeinrichtung zur elastischen Fixierung der mindestens einen Spleißkassette im Gehäuse (20) vorgesehen ist.

5. Patch Panel nach einem der Ansprüche 1 bis 4, **dadurch gekennzeichnet, dass** es im wesentlichen aus Metall ist.

6. Patch Panel nach einem der Ansprüche 1 bis 4, **dadurch gekennzeichnet, dass** es zumindest teilweise aus Kunststoff ist.

7. Verfahren zur Installation eines Patch Panel nach einem der Ansprüche 1 bis 6, mit den folgenden Verfahrensschritten:
Einschieben mindestens einer mit Lichtwellenleiter Kabeln und in den Öffnungen in der Frontwand der Spleißkassette befestigten Lichtwellenleitersteckern installierten Spleißkassette (12) in das Gehäuse (20);
ggf. Aufbringen des Gehäusedeckels (31); Befestigen des zusammengebauten Gehäuses (20) an einem Kabelschrank durch Anbringen der Seitenbefestigungsabschnitte (24) über die Befestigungsbohrungen (25) an den Kabelschrankträgern; Befestigen der Frontplattenbefestigungsabschnitte (29) der Frontplatte (26, 28) mittels der Schraublöcher (30) an den Befestigungsbohrungen (25) der Seitenbefestigungsabschnitte (24); so daß die Frontplatte (26, 28) ohne Abbau des Gehäuses (20) vom Schrank an- bzw. abgebaut werden kann.

8. Verfahren zur Installation eines Patch Panel nach Anspruch 7, **dadurch gekennzeichnet, daß** zur Nachinstallation/Inspektion bei einer eingebauten Spleißkassette (12) der entfernbare Rückwandabschnitt (19) der Spleißkassette gelöst und mit dem daran befestigten Kassettenhalter (15) herausgezogen, nachinstalliert/inspiziert und wieder eingebaut wird.

## Claims

1. Patch panel, in particular for optical waveguides, comprising:
a housing (20) with a housing bottom (22), housing side walls (23) having side attachment sections (24) that are bent in a rectangular manner and respectively have two mounting holes (25) for attaching the patch panel at a cable cabinet, and optionally a housing cover (31) that can be attached thereto;
and
at least one splice cassette (12) that can be inserted into the housing (20) and that has a splice cassette bottom (13), a splice cassette back wall (19) having optical waveguide cable inlets with optical waveguide cable fasteners; a cassette holder (15) that is located therein, as well as a perpendicular front wall (14) with connector holders for the optical waveguide plugs that exit from the splice cassette (12);
**characterized by** having
a dismountable front plate (26, 28) with at least one section corresponding to the couplings that are to be plugged in at the optical waveguide plugs and lateral front plate attachment sections (29) with respectively one screw hole (30) for attaching the front plate (26, 28) at one of the two mounting holes (25) and a section for the other mounting hole (25) of one of the side attachment sections (24) of the housing (20).

2. Patch panel according to claim 1, **characterized in that** the splice cassette (12) has a detachable back wall (19) at which the cassette holder (15) is attached and together with which it can be pulled out without the patch panel having to be removed from the cable cabinet.

3. Patch panel according to one of the claims 1 to 2, **characterized in that** the housing bottom part (23, 22, 19) is bent from a flat material section.

4. Patch panel according to one of the claims 1 to 3, **characterized in that** a spring device is provided for elastically affixing the at least one splice cassette inside the housing (20).

5. Patch panel according to one of the claims 1 to 4, **characterized in that** it is substantially made of metal.

6. Patch panel according to one of the claims 1 to 4, **characterized in that** it is at least partially made of a plastic material.

7. Method for installing a patch panel according to one of the claims 1 to 6, comprising the following process steps:
inserting at least one splice cassette (12), which is installed with optical waveguide cables and optical waveguide plugs attached in the openings in the front wall of the splice cassette, into the housing (20);
optionally putting on the housing cover (31);
affixing the assembled housing (20) at a cable cabinet by attaching the side attachment sections (24) at the cable cabinet supports via the mounting holes (25);
affixing the front plate attachment sections (29) of the front plate (26, 28) at the mounting holes (25) of the side attachment sections (24) by means of the screw holes (30); so that the front plate (26, 28) can be attached or removed from the cabinet without the housing (20) having to be removed.

8. Method for installing a patch panel according to claim 7, **characterized in that**, for the purpose of subsequent installation/inspection, with an installed splice cassette (12) the removable back wall section (19) of the splice cassette is detached and pulled out with the cassette holder (15) attached thereto, and is subsequently installed/inspected and reinstalled.

## Revendications

1. Panneau de raccordement notamment destiné à des guides d'ondes optiques, comprenant :
un boîtier (20) comportant un fond (22) ; des parois latérales (23) munies de zones (24) de fixation latérale, coudées à angle droit et respectivement percées de deux trous de fixation (25), en vue de fixer ledit panneau de raccordement à une armoire de câblage ; et, le cas échéant, un couvercle (31) pouvant être mis en place sur ledit boîtier ;
et
au moins une cassette d'épissurage (12) pouvant être insérée dans ledit boîtier (20) et comportant un fond (13) ; une paroi postérieure (19) pourvue d'entrées de câbles optiques associées à des organes de fixation de câbles optiques ; un support intégré (15) de ladite cassette ; ainsi qu'une paroi frontale verticale (14) dotée de logements affectés aux connecteurs enfichables desdits guides d'ondes optiques, sortant de ladite cassette d'épissurage (12) ;
**caractérisé par**
une platine frontale démontable (26, 28) comprenant au moins une zone correspondant aux accouplements devant être emboîtés sur les connecteurs enfichables des guides d'ondes optiques ; des zones latérales de fixation (29) respectivement munies d'un trou de vissage (30), en vue de fixer ladite platine frontale (26, 28) à l'un des deux trous de fixation (25) ; et une zone dévolue à l'autre trou de fixation (25) de l'une des zones (24) de fixation latérale du boîtier (20).

2. Panneau de raccordement selon la revendication 1, **caractérisé par le fait que** la cassette d'épissurage (12) présente une paroi postérieure (19) amovible, à laquelle le support (15) de ladite cassette est fixé et avec laquelle il peut être extrait sans dissocier ledit panneau de raccordement d'avec l'armoire de câblage.

3. Panneau de raccordement selon l'une des revendications 1 à 2, **caractérisé par le fait que** la partie inférieure (23, 22, 19) du boîtier est coudée à partir d'un tronçon de matériau aplati.

4. Panneau de raccordement selon l'une des revendications 1 à 3, **caractérisé par le fait qu'**un dispositif élastique est prévu pour bloquer élastiquement à demeure, dans le boîtier (20), la cassette d'épissurage à présence minimale.

5. Panneau de raccordement selon l'une des revendications 1 à 4, **caractérisé par le fait qu'**il est essentiellement constitué d'un métal.

6. Panneau de raccordement selon l'une des revendications 1 à 4, **caractérisé par le fait qu'**il est, au moins partiellement, constitué d'une matière plastique.

7. Procédé d'installation d'un panneau de raccordement conforme à l'une des revendications 1 à 6, incluant les étapes opératoires suivantes :
insertion, dans le boîtier (20), d'au moins une cassette d'épissurage (12) installée par des câbles optiques et par des connecteurs enfichables de guides d'ondes optiques, fixés dans les orifices pratiqués dans la paroi frontale de ladite cassette d'épissurage ;
le cas échéant, mise en place du couvercle (31) dudit boîtier ;
fixation du boîtier assemblé (20) à une armoire de câblage, par montage rapporté des zones (24) de fixation latérale sur les supports de ladite armoire de câblage, par l'intermédiaire des trous de fixation;
fixation des zones de fixation (29) de la platine frontale (26, 28), au moyen des trous de vissage (30), aux trous de fixation (25) desdites zones (24) de fixation latérale, de telle sorte que ladite platine frontale (26, 28) puisse être respectivement rapportée sur ladite armoire, ou dissociée d'avec cette dernière, sans dépose dudit boîtier (20).

8. Procédé selon la revendication 7, dévolu à l'installation d'un panneau de raccordement et **caractérisé par le fait que**, pour effectuer un remaniement/une inspection en présence d'une cassette d'épissurage (12) intégrée, la zone de paroi postérieure démontable (19) de ladite cassette d'épissurage est dissociée, puis extraite, remaniée/inspectée et réintégrée avec le support (15) de ladite cassette qui y est fixé.
